# EUROPEAN PATENT APPLICATION

(11) **EP 1 298 533 A1**
(43) Date of publication of application: **02.04.2003**
(21) Application number: 01917130.5
(22) Date of filing: 30.03.2001
(51) Int. Cl.: G06F 17/00

(54) **DEVICE FOR SUPPLYING INFORMATION TO A USER AND CORRESPONDING METHOD**

(30) Priority: 31.03.2000 ES 200000802
(71) Applicant: A.G.T. Servicios, SCCL, 08820 El Prat de Llobregat (ES)
(72) Inventor: FERNANDEZ GAVILAN, Antonio, E-08820 El Prat de Llobregat (ES)
(74) Representative: Curell Sunol, Marcelino
(86) International application number: ES0100126
(87) International publication number: WO01073576

(57) **Abstract**

A device for supplying information to a user and corresponding process is disclosed. The device comprises a support structure, a monitor, a computer with a data storage support, and a modem connected to a mobile telephone. The device is located in a public place and is capable of sending data to and receiving data from an external information source. The process comprises a data presentation step, a data selection step on the part of the user, by means of which certain items of output data are selected, and a display step, in which the output data is presented to the user. In the data selection step the computer analyses whether it has the output data in the data storage support and, otherwise, it receives the information from the external data source over the mobile telephone.

## Description

The invention relates to a device for supplying information to a user of the type comprising a support structure, a monitor, and a computer with a data storage support, where the device is located in a place of public access. The invention relates also to a process for supplying information to a user, of the type that governs a device for supplying information such as the one mentioned above, and comprising a data presentation step, a data selection step, in which the user enters selection data by means of which output data is selected depending on the selection data, and a display step, in which the output data are presented to the user.

Devices are known that give information to a user, and which consist of a computer. Generally, it is contemplated that these devices should give substantially time-invariable information, as for example, tourist information, in museums, etc. In these cases, the pertinent information is loaded in the data storage support, for example a hard disk, a CD-ROM, etc., only once and the device is capable of presenting it to the user as many times as may be required. These devices are to some extent independent, in the sense that they can be positioned in more or less arbitrary places, since the device only requires a conventional supply of electricity. However, it is necessary that the information contained in the data support should not require frequent updating.

Other devices are prepared for connection to an external data source, for example a central computer. In this way they can give information that can be updated, since this information is updated in a data support of the central computer, to which each of the devices for supplying information has access. However, this requires setting up a data connexion between the device for supplying information and the external information source. This type of connexion is expensive and delicate, whereby the places of installation of this type of devices are usually limited to places such as the entrances to banks, large public buildings (railway stations, public buildings, etc.) and similar places, where it is possible to install and maintain a data communications network.

It is an object of the invention to overcome these drawbacks. This object is achieved by a device for supplying information of the type first mentioned above characterized in that it is provided with a modem connected to a mobile telephone over which said device is capable of transmitting data to and receiving data from an external information source. This type of devices for supplying information is particularly useful when they are designed as mobile units, since they only require a conventional electrical connection. Currently mobile telephony is of sufficient quality to allow a data connection between computers. Also, the coverage reaches practically any point of interest. In this way the device may be installed in practically any location. Alternatively, the device for supplying information could be provided with an autonomous power supply, such as a battery that allow the device to be endowed with a certain degree of autonomy to operate completely independently from any external source of power supply.

Preferably the information given depends on input data provided by the user.

A preferred embodiment contemplates that the monitor is tactile, that is to say one that is capable of detecting the contact of a finger on certain areas of this monitor. This type of monitor allows a more ergonomic communication with the user, since the latter does not have to interpret a number of more or less complex orders, mainly for people of a certain age or not familiarized with computerized equipment, but rather it is sufficient to touch the desired option on the screen directly with the finger.

The device is advantageously provided with a printer and a keyboard.

The mobile telephone is preferably connected to an Internet server. This allows all the advantages of communication by Internet to be added to the above-mentioned advantages

Finally the device for supplying information is advantageously provided with means that allow payment by means of an electronic transaction. These means can be conventional means that allow payment to be made by means of a magnetic card and/or in cash.

The invention has also for object a process for supplying information to a user, of the type first mentioned above, characterized in that in the data selection step the computer analyses whether it has the output data in the data storage support and, otherwise, it communicates with the external data source over the mobile telephone, receiving the output data from the external source of communication over the mobile telephone.

The process preferably includes a step of printing the selected data, since this allows the user to take a printed copy of the requested information.

The process advantageously includes a step of periodic updating of the information contained in the data support. In this way updated information may be available in the data support and the need to request information from the external data source during the data selection step may be reduced, which allows reducing the response time of the device to be reduced.

In certain cases it is of interest that the process includes a step of complementation of data, in which said user provides complementary data that are sent to said external information source. This complementary data may be a request for additional information, a request for personalized contact, data allowing an electronic transaction to be carried out, such as for example a purchase by means of a magnetic card, etc.

Further advantages and features of the invention will be appreciated from the following description, in which, without any limitative character, a preferred embodiment of the invention is disclosed.

The preferred embodiment consists of a device for supplying information that provides information on real estate offers.

The device consists of a support structure, with a tactile monitor, a keyboard, a printer, and a computer with a data storage support and a modem connected to a mobile telephone. The device requires a conventional electrical outlet, and it can be located in any public place, such as commercial centres, galleries, etc.

In a first step, the device presents a series of data that inform the user on the enterprise or company owning or leasing the device and/or about the products or services offered through said device, as well as general instructions on the operation of the device.

Thereafter, a data selection step begins. In this step the user should enter a series of selection data which will serve as basis for the selection of the output data. In the present example, is possible to make the selection of apartments according to different criteria (surface area, price, storey, zone, reference n°, etc.), and, within each criterion, a certain value or range of values can be set. In practice, this selection data input is carried out in a very simple way: the user is presented with a number of preset options and the user has to touch only one of them on the tactile screen. In this way the computer receives the corresponding selection data. For example, on one screen, the user can be asked whether he/she wants the apartment selection criterion to be the location, the price, the area in m², etc. If the user chooses the price to be the criterion, for example, the computer picks up this first selection data and presents a second screen on which several price ranges are shown. The user selects a range, by touching the screen in the corresponding place, and in this way the computer receives a second selection data. In this way the user can enter all the necessary selection data in a simple way. Once the selection data has been entered, the computer establishes a link, over the mobile telephone, with a central computer which performs the function of external information source, and transmits the selection data thereto. The central computer transmits, in turn, the corresponding output data that will be shown to the user through the monitor. The output data will be, in this particular case, a number of dwellings or premises whose parameters are comprised within the selection data. For each of the premises or dwellings a reference n°, information relative to the zone, the surface area, the price, the storey, etc. is given. Also given is a plan layout of the dwelling or premises. The user can see pictures of the various rooms of the dwelling or premises, by touching the corresponding place in the plan layout with a finger. In certain cases the user may even see said pictures more or less enlarged.

Finally, in a step of data complementation, if the user desires more detailed information, or wants to make direct contact to negotiate a possible purchase, he has the option of providing certain details by which the user can be located, as a telephone or fax number.

The way the data is distributed between the data storage support included in the device and the external information source depends on the practical embodiment in each case. In general, an attempt will be made to store information that is subject to little change and/or it is of great size, in the data storage support, so as not to slow down the display process. One example is the pictures of the apartments. In this case, when a user requires seeing a certain apartment for the first time, the information is output from the external information source and is stored in the data storage support, so in future consultations the pictures are already available without them having to be transmitted again. Alternatively, it is also possible that once this type of information has been loaded in the external data source, it may be sent to the device automatically, for example, by means of a system of periodical update of information every night. In other cases, for other products where the information varies more quickly, it is not practical to store the information in the data storage support, since this information becomes obsolete very quickly, whereby it is better to establish communication with the external information source every time the user requests information.

The example has been described with reference to real estate offers, however it is possible to use a device according to the invention for practically any type of product or service.

## Claims

1. A device for supplying information to a user of the type comprising a support structure, a monitor, and a computer with a data storage support, where said device is located in a place of public access, **characterized in that** it has a modem connected to a mobile telephone over which said device is capable of transmitting data to and receiving data from an external information source.

2. The device for supplying information according to claim 1, **characterized in that** said information supplied depends on input data provided by said user.

3. The device for supplying information according to claim 1 or claim 2, **characterized in that** said information supplied is information on real estate offers.

4. The device for supplying information according to at least one of claims 1 to 3, **characterized in that** said monitor is tactile, i.e., it is capable of detecting the contact of a finger on certain areas of said monitor.

5. The device for supplying information according to at least one of claims 1 to 4, **characterized in that** it has a printer.

6. The device for supplying information according to at least one of claims 1 to 5, **characterized in that** it is mobile, requiring only a conventional electrical supply connection.

7. The device for supplying information according to at least one of claims 1 to 6, **characterized in that** it has a keyboard.

8. The device for supplying information according to at least one of claims 1 to 7, **characterized in that** said mobile telephone connects to an Internet server.

9. The device for supplying information according to at least one of claims 1 to 8, **characterized in that** it is provided with means allowing payment to be made by means of an electronic transaction.

10. A process for supplying information to a user, of the type that governs a device for supplying information according to at least one of claims 1 to 9, and comprising a data presentation step, a data selection step, in which said user enters selection data, by means of which output data is selected depending on said selection data, and a display step, in which said output data is presented to said user, **characterized in that** in said data selection step said computer analyses whether it has said output data in said data storage support and, otherwise, it communicates with said external data source over said mobile telephone, receiving said output data from said external source of communication over said mobile telephone.

11. The process for supplying information according to claim 10, **characterized in that** it includes a step of printing said selected data.

12. The process for supplying information according to claim 10 or claim 11, **characterized in that** it includes a step of periodic updating of the information contained in said data support.

13. The process for supplying information according to at least one of claims 10 to 12, **characterized in that** it includes a step of complementation of data, in which said user provides complementary data that is sent to said external information source.
